# EUROPEAN PATENT APPLICATION

(11) **EP 4 790 804 A1**
(43) Date of publication of application: **12.08.2026**
(21) Application number: 25869629.3
(22) Date of filing: 18.12.2025
(51) Int. Cl.: H01M 50/164, H01M 50/152, H01M 50/30

(54) **COVER PLATE, BATTERY, AND ELECTRIC DEVICE**

(30) Priority: 27.12.2024 CN 202423277289 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: LIU, Rongwei, Huizhou, Guangdong 516039 (CN); LI, Renbing, Huizhou, Guangdong 516039 (CN); YAN, Bo, Huizhou, Guangdong 516039 (CN); HE, Wei, Huizhou, Guangdong 516039 (CN)
(74) Representative: Zhu, Puxing
(86) International application number: PCT/CN2025/143660
(87) International publication number: WO 2026/138646

(57) **Abstract**

The present application provides a cover plate, a battery, and an electrical device. The cover plate includes a cover plate body, an explosion-proof structure, and a copper layer. The explosion-proof structure is disposed on the cover plate body, at least one side of the cover plate body is provided with the copper layer, the copper layer covers the explosion-proof structure, and the cover plate body and the copper layer are made of different materials.

## Description

The present application claims a priority to Chinese Patent Application No. 202423277289.X, filed with the China National Intellectual Property Administration (CNIPA) on December 27, 2024, entire contents of which are incorporated herein by reference.

### TECHNICAL FIELD

The present application relates to the technical field of battery structures, for example, to a cover plate, a battery, and an electrical device.

### BACKGROUND

The cover plate plays an important role in the production of batteries, and the cover plate is an external enclosed part of a battery (such as common AA battery, AAA battery, etc.), and generally functions to protect the internal structure of the battery, maintain the safety of the battery, and provide contact points of the positive electrode and negative electrode of the battery. In order to ensure the structural strength of the cover plate and the battery, the cover plate is usually made of a metal material and has a certain structural design to ensure effective operation of the battery.

### SUMMARY

The cover plate in the related art is easily corroded.

In a first aspect, the present application provides a cover plate, including:
a cover plate body;
an explosion-proof structure disposed on the cover plate body; and
a copper layer, wherein at least one side of the cover plate body is provided with the copper layer, the copper layer covers the explosion-proof structure, and the cover plate body and the copper layer are made of different materials.

In a second aspect, the present application provides a battery, including a housing, an electrode assembly, and the cover plate mentioned above, wherein the housing is formed with a mounting cavity, the electrode assembly is mounted in the mounting cavity, and the cover plate is connected to the housing.

In a third aspect, the present application provides an electrical device including the battery. Beneficial Effects

According to the cover plate provided by the present application, the cover plate body is provided with the copper layer, so that the copper layer may prevent the cover plate body from corrosion, and improve corrosion resistance of the cover plate body. The copper layer covers the explosion-proof structure, so as to improve corrosion resistance of the explosion-proof structure and avoid a situation that an opening force is inconsistent due to corrosion of the explosion-proof structure.

Meanwhile, the copper layer is used as an anti-corrosion protection layer, and copper plating can be implemented at room temperature, that is, the copper layer can be disposed on the cover plate body without heating, thereby avoiding the explosion-proof structure being strengthened due to heating, and ensuring consistency of the opening force of the explosion-proof structure. In addition, due to high thermal conductivity of copper, heat dissipation of the battery is facilitated.

### BRIEF DESCRIPTION OF THE DRAWINGS

FIG. 1 is one of structural schematic diagrams of the cover plate provided by a specifical embodiment of the present application;
FIG. 2 is another of structural schematic diagrams of the cover plate provided by a specifical embodiment of the present application;
FIG. 3 is a cross-sectional view of a cover plate provided by a specifical embodiment of the present application;
FIG. 4 is an enlarged schematic diagram of a structure at A in FIG. 3;
FIG. 5 is a structural schematic diagram of a battery provided by a specifical embodiment of the present application.

### DETAILED DESCRIPTION

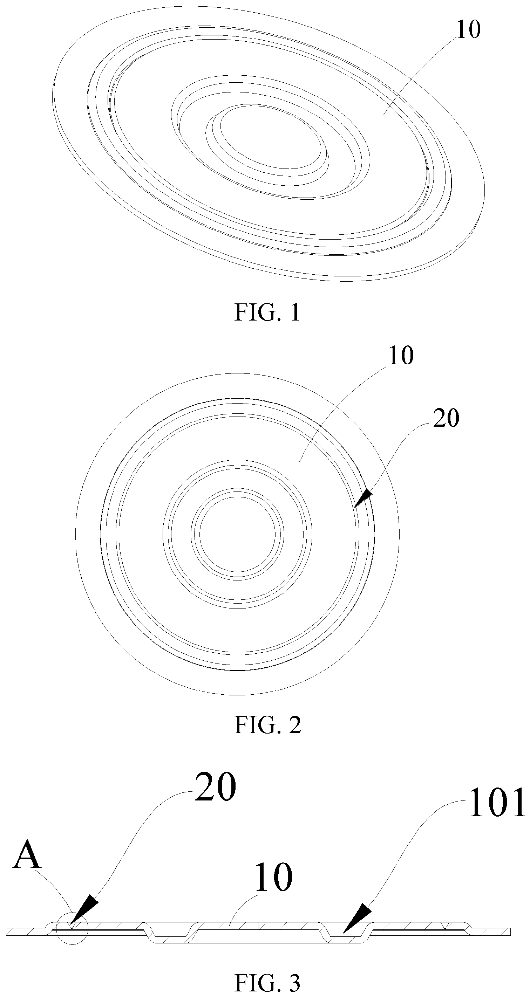

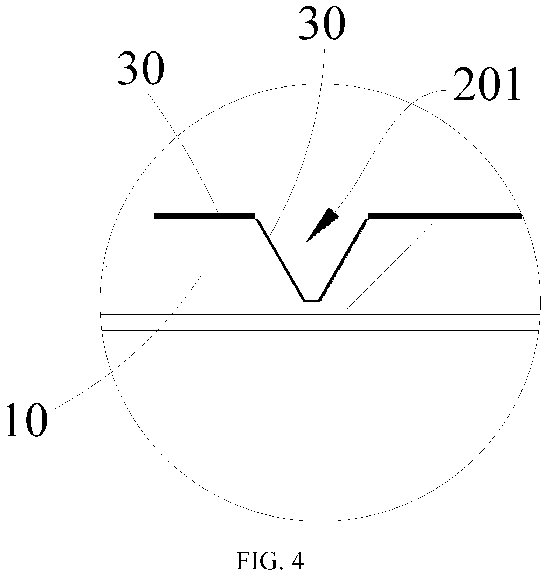

An embodiment of the present application discloses a cover plate. As shown in FIG. 1, FIG. 2, FIG. 3, and FIG. 4, the cover plate includes a cover plate body 10, an explosion-proof structure 20, and a copper layer 30. The explosion-proof structure 20 is disposed on the cover plate body 10, at least one side of the cover plate body 10 is provided with the copper layer 30, the copper layer 30 covers the explosion-proof structure 20, and the cover plate body 10 and the copper layer 30 are made of different materials.

According to the cover plate the embodiment of the present application, the cover plate body 10 is provided with the copper layer 30, so that the copper layer 30 may prevent the cover plate body 10 from being corroded, and improve corrosion resistance of the cover plate body 10. The copper layer 30 covers the explosion-proof structure 20, so as to improve corrosion resistance of the explosion-proof structure 20 and avoid a situation that an opening force is inconsistent due to corrosion of the explosion-proof structure 20.

Meanwhile, the copper layer 30 is used as an anti-corrosion protection layer, and copper plating can be implemented at room temperature, that is, the copper layer 30 can be disposed on the cover plate body 10 without heating, thereby avoiding the explosion-proof structure 20 being strengthened due to heating, and ensuring consistency of the opening force of the explosion-proof structure 20. In addition, due to high thermal conductivity of copper, heat dissipation of the battery is facilitated.

It can be understood that, in the related art, nickel plating is used to improve the corrosion resistance of the cover plate, but the nickel plating cannot be implemented at room temperature, heating is required to achieve nickel plating on the cover plate. During a process of heating and nickel plating, the explosion-proof valve of the cover plate is strengthened, leading to inconsistent opening force. In the present application, the corrosion resistance of the cover plate is improved by disposing the copper layer 30 on the cover plate body 10, and the copper plating can be implemented at room temperature, that is, the copper layer 30 can be disposed on the cover plate body 10 at room temperature without a step of heating, thereby preventing the explosion-proof structure 20 of the cover plate body 10 from suffering inconsistent opening force caused by heating.

It can be understood that, in the related art, nickel plating on the cover plate body 10 is used to improve the corrosion resistance of the cover plate, since a surface compactness of a nickel layer is insufficient and a porosity thereof is large, iron leakage is prone to occur. However, in the present application, the cover plate body 10 is provided with the copper layer 30 to improve the corrosion resistance of the cover plate, since the copper layer 30 is denser than a surface of the nickel layer, and a porosity thereof is lower, a possibility of iron leakage can be effectively reduced.

It can be understood that when the cover plate is mounted on the battery, a connecting piece of the battery is required to be connected to the cover plate, and most of connecting pieces of the battery are copper connecting pieces for consideration of factors such as stability and cost. In the related art, when the cover plate is protected by means of nickel plating, a junction between the connecting piece and the cover plate is a contact between copper material and nickel material, that is, a potential difference is easily generated at the junction between the connecting piece and the cover plate, thereby causing corrosion of the cover plate and affecting the safety of the battery. However, in the present application, the cover plate is covered and protected by using the copper layer 30, and the junction between the connecting piece and the cover plate is a contact between copper material and copper material contact, so that no potential difference is generated between the connecting plate and the cover plate body 10, thereby effectively avoiding corrosion of the cover plate body 10 due to the potential difference, improving the corrosion resistance of the cover plate body 10, and ensuring the safety of the battery.

It may be understood that at least one side of the cover plate body 10 is provided with the copper layer 30, which can mean one or more of wall surfaces of the cover plate body 10 is provided with the copper layer 30, and mean all wall surfaces of the cover plate body 10 are provided with the copper layer 30.

In some examples, the cover plate body 10 and the explosion-proof structure 20 are integrally formed.

In some examples, the cover plate body 10 is, for example, a cold-rolled steel plate, stainless steel, or a composite material (formed by compounding at least two materials).

In some embodiments, an upper surface of the cover plate body 10 is provided with the copper layer 30.

It can be understood that, since the upper surface of the cover plate body 10 is provided with the copper layer 30, the copper layer 30 can protect the upper surface of the cover plate body 10, thereby preventing the upper surface of the cover plate body 10 from being corroded, and improving the corrosion resistance of the cover plate body 10. Since the copper layer 30 can be disposed on the cover plate body 10 at room temperature, a difficulty of performing anti-corrosion protection on the cover plate is reduced, and the copper layer 30 has excellent compactness and low porosity, thereby effectively avoiding the possibility of iron leakage. In addition, the copper layer 30 has excellent ductility, so that the copper layer 30 is not easy to fall off during production of the battery, and the copper layer 30 can stably protect the cover plate body 10.

In some embodiments, a lower surface of the cover plate body 10 is provided with the copper layer 30.

It can be understood that, since the lower surface of the cover plate body 10 is provided with the copper layer 30, the copper layer 30 can protect the lower surface of the cover plate body 10, thereby preventing the lower surface of the cover plate body 10 from being corroded, and improving the corrosion resistance of the cover plate body 10. Since the copper layer 30 can be disposed on the cover plate body 10 at room temperature, a difficulty of performing anti-corrosion protection on the cover plate is reduced, and the copper layer 30 has excellent compactness and low porosity, thereby effectively avoiding the possibility of iron leakage. In addition, the copper layer 30 has excellent ductility, so that the copper layer 30 is not easy to fall off during production of the battery, and the copper layer 30 can stably protect the cover plate body 10.

In some examples, the battery includes a housing 40, the cover plate is connected to the housing 40, a side of the cover plate facing an inner bottom wall of the housing 40 is a lower surface of the cover plate, and a side of the cover plate away from the inner bottom wall of the housing 40 is an upper surface of the cover plate.

In some embodiments, a sidewall surface of the cover plate body 10 is provided with a copper layer 30.

It can be understood that, since the sidewall surface of the cover plate body 10 is provided with the copper layer 30, the copper layer 30 can protect the sidewall surface of the cover plate body 10, thereby preventing the sidewall surface of the cover plate body 10 from being corroded, and improving the corrosion resistance of the cover plate body 10. Since the copper layer 30 can be disposed on the cover plate body 10 at room temperature, a difficulty of performing anti-corrosion protection on the cover plate is reduced, and the copper layer 30 has excellent compactness and low porosity, thereby effectively avoiding the possibility of iron leakage. In addition, the copper layer 30 has excellent ductility, so that the copper layer 30 is not easy to fall off during production of the battery, and the copper layer 30 can stably protect the cover plate body 10.

In some examples, the upper surface and the lower surface of the cover plate body 10 are both provided with the copper layer 30, to protect the upper surface and the lower surface of the cover plate body 10 by using the copper layer 30, and effectively prevent the upper surface and the lower surface of the cover plate body 10 from being corroded.

In some examples, the upper surface of the cover plate body 10, the lower surface of the cover plate body 10, and the sidewall surface of the cover plate body 10 are provided with the copper layer 30 at the same time, that is, the cover plate body 10 is fully covered by using the copper layer 30, so that the copper layer 30 can fully protect the cover plate body 10, thereby effectively preventing corrosion of the cover plate body 10.

In some embodiments, the copper layer 30 is disposed on the cover plate body 10 by means of electroplating or electroless plating.

It can be understood that the copper layer 30 is disposed on the cover plate body 10 by means of electroplating, so that the copper layer 30 can protect the cover plate body 10 and prevent the cover plate body 10 from external corrosion and electrolyte corrosion. Since the copper layer 30 can be disposed on the cover plate body 10 at room temperature, a difficulty of disposing the copper layer 30 on the cover plate body 10 is reduced. No heating is required, which will not cause the explosion-proof structure 20 to be strengthened to have inconsistent opening force. Moreover, the copper layer 30 has excellent compactness and low porosity, thereby effectively avoiding the possibility of iron leakage. In addition, the copper layer 30 has excellent ductility, so that the copper layer 30 is not easy to fall off during production of the battery, and the copper layer 30 can stably protect the cover plate body 10.

It can be understood that the copper layer 30 is disposed on the cover plate body 10 by means of electroless plating, so that the copper layer 30 can protect the cover plate body 10 and prevent the cover plate body 10 from external corrosion and electrolyte corrosion. Since the copper layer 30 can be disposed on the cover plate body 10 at room temperature, a difficulty of disposing the copper layer 30 on the cover plate body 10 is reduced. No heating is required, which will not cause the explosion-proof structure 20 to be strengthened to have inconsistent opening force. Moreover, the copper layer 30 has excellent compactness and low porosity, thereby effectively avoiding the possibility of iron leakage. In addition, the copper layer 30 has excellent ductility, so that the copper layer 30 is not easy to fall off during production of the battery, and the copper layer 30 can stably protect the cover plate body 10.

In some embodiments, a ratio of a thickness of the copper layer 30 to a thickness of the cover plate body 10 is between 0.1% and 10%.

It can be understood that if the ratio of the thickness of the copper layer 30 to the thickness of the cover plate body 10 is less than 0.1%, the thickness of the copper layer 30 is too thin, it is difficult to effectively protect the cover plate body 10, and the cover plate body 10 may still be corroded; if the ratio of the thickness of the copper layer 30 to the thickness of the cover plate body 10 is greater than 10%, the thickness of the copper layer 30 is too thick, which will cause the overall thickness of the cover plate to be too large, which is not conducive to a miniaturization design of the cover plate. Therefore, in the present application, the ratio of the thickness of the copper layer 30 to the thickness of the cover plate body 10 is between 0.1% and 10%, so that the copper layer 30 can effectively protect the cover plate body 10, avoid corrosion of the cover plate body 10, reduce impact of the copper layer 30 on an overall thickness of the cover plate, avoid excessively large thickness of the cover plate, and facilitate the miniaturization design of the cover plate.

In some embodiments, as shown in FIG. 1, FIG. 2, and FIG. 3, the explosion-proof structure 20 includes an explosion-proof score 201, and a bottom wall and a side wall of the explosion-proof score 201 are both covered with the copper layer 30.

It can be understood that a bottom wall and a side wall of the explosion-proof score 201 are both covered with the copper layer 30, so as to protect the explosion-proof score 201 by using the copper layer 30, and effectively prevent the explosion-proof score 201 from being corroded. The stability of the explosion-proof structure 20 is improved.

In some examples, there are at least two explosion-proof scores 201, and the at least two explosion-proof scores 201 are evenly distributed on the cover plate body 10. For example, the at least two explosion-proof scores 201 are evenly distributed along a circumferential direction of the cover plate body 10.

In some examples, the explosion-proof score 201 is an annular score, and the annular score is disposed around a center point of the cover plate body 10.

In some embodiments, a thickness of the copper layer 30 at the bottom wall of the explosion-proof score 201 is between 0.1µm and 6µm.

It can be understood that, if the thickness of the copper layer 30 at the bottom wall of the explosion-proof score 201 is less than 0.1µm, it is difficult for the copper layer 30 to effectively protect the explosion-proof score 201, and the explosion-proof score 201 may still be corroded; if the thickness of the copper layer 30 at the bottom wall of the explosion-proof score 201 is greater than 6µm, the thickness of the copper layer 30 is too large, and an impact of the copper layer 30 on the opening force of the explosion-proof score 201 is too large, thereby easily leading to a large opening force of the explosion-proof score 201. Therefore, in the present application, the thickness of the copper layer 30 at the bottom wall of the explosion-proof score 201 is between 0.1µm and 6µm, so that the copper layer 30 can not only effectively protect the explosion-proof score 201 and avoid corrosion of the explosion-proof score 201, but also reduce an impact of the copper layer 30 on the opening force of the explosion-proof score 201 and avoid excessively large opening force of the explosion-proof score 201.

In some embodiments, the thickness of the copper layer 30 at the bottom wall of the explosion-proof score 201 is less than a thickness of the copper layer 30 at the side wall of the explosion-proof score 201, so that copper plating is performed at the explosion-proof score 201 to obtain the copper layer 30, thereby improving convenience of processing the cover plate.

In some embodiments, a thickness of the copper layer 30 at the side wall of the explosion-proof score 201 is less than a thickness of the copper layer 30 at a peripheral side of an opening of the explosion-proof score 201, so that copper plating is performed at a surface of the cover plate to obtain the copper layer 30, thereby improving convenience of processing the cover plate.

In some embodiments, a chamfer is provided at a junction between the copper layer 30 at the bottom wall of the explosion-proof score 201 and the copper layer 30 at the side wall of the explosion-proof score 201, so as to facilitate stamping and fonning of the explosion-proof score 201.

In some embodiments, a chamfer is provided at a junction between the copper layer 30 at the side wall of the explosion-proof score 201 and the copper layer 30 at the peripheral side of the opening of the explosion-proof score 201, so as to facilitate stamping and forming of the explosion-proof score 201.

In some embodiments, a dyne value of the copper layer 30 is greater than 36, thereby ensuring a bonding force between the copper layer 30 and the cover plate body 10, enabling the copper layer 30 to be stably connected to the cover plate body 10, effectively preventing the copper layer 30 from falling off, enabling the copper layer 30 to stably protect the cover plate body 10, and effectively preventing the cover plate body 10 from being corroded.

It can be understood that the dyne value is usually a parameter used to describe adhesion of coatings, plating layers or surface-coated materials, and is an important indicator for measuring an adhesion performance between a plating layer and a substrate.

In some embodiments, the copper layer 30 is disposed on the cover plate body 10 by means of electroplating or electroless plating.

An embodiment of the present application further discloses a battery. The battery includes a cover plate.

According to the battery of the embodiment of the present application, the cover plate body 10 is provided with the copper layer 30, so that the copper layer 30 can prevent the cover plate body 10 from being corroded, and improve corrosion resistance of the cover plate body 10. The copper layer 30 covers the explosion-proof structure 20, so as to improve corrosion resistance of the explosion-proof structure 20 and avoid a situation that an opening force is inconsistent due to corrosion of the explosion-proof structure 20.

Meanwhile, the copper layer 30 is used as an anti-corrosion protection layer, and copper plating can be implemented at room temperature, that is, the copper layer 30 can be disposed on the cover plate body 10 without heating, thereby avoiding the explosion-proof structure 20 being strengthened due to heating, and ensuring consistency of the opening force of the explosion-proof structure 20. In addition, due to high thermal conductivity of copper, it facilitates heat dissipation of the battery.

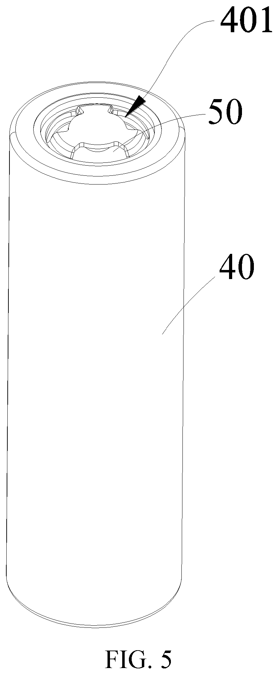

In some embodiments, as shown in FIG. 2, FIG. 4, and FIG. 5, the battery further includes a housing 40 and an electrode assembly 50. The housing 40 is formed with a mounting cavity 401, the electrode assembly 50 is mounted in the mounting cavity 401, and the cover plate is connected to the housing 40.

In some embodiments, the battery further includes an electrode connecting piece, a first end of the electrode connecting piece is connected to the electrode assembly 50, a second end of the electrode connecting piece is connected to the cover plate, and material of the second end of the electrode connecting piece is the same as material of the copper layer 30.

It can be understood that, the material of the second end of the electrode connecting piece is set to be the same as the material of the copper layer 30, so that a potential difference is not generated at the junction between the electrode connecting piece and the cover plate, thereby avoiding corrosion of the cover plate body 10 caused by the potential difference.

In some embodiments, as shown in FIG. 1, FIG. 2, and FIG. 3, the cover plate body 10 is formed with a groove 101, a groove opening of the groove 101 faces a direction away from the mounting cavity 401, and a wall surface of the groove 101 is provided with the copper layer 30.

It may be understood that, a side of the cover plate body 10 away from the mounting cavity 401 is provided with the groove 101, so as to apply a force to the cover plate by using the groove 101, to rotate the cover plate.

It can be understood that, the wall surface of the groove 101 is provided with the copper layer 30, so as to enable the copper layer 30 to protect the wall surface of the groove 101 and prevent the wall surface of the groove 101 from being corroded.

In some embodiments, a thickness of the copper layer 30 at the bottom wall of the groove 101 is less than a groove depth of the groove 101.

It can be understood that, the copper layer 30 is disposed on the bottom wall of the groove 101, so as to enable the copper layer 30 to protect the bottom wall of the groove 101, and prevent corrosion of the bottom wall of the groove 101. In addition, because the thickness of the copper layer 30 at the bottom wall is less than the groove depth of the groove 101, the copper layer 30 does not fill the groove 101, that is, the copper layer 30 at the groove 101 does not protrude from the groove 101, and may still apply a force to the cover plate body 10 through the groove 101.

According to the electrical device of the embodiment of the present application, the cover plate body 10 is provided with the copper layer 30, so that the copper layer 30 may prevent the cover plate body 10 from being corroded, and improve corrosion resistance of the cover plate body 10, and further improve use safety of the battery and the electrical device. The copper layer 30 covers the explosion-proof structure 20, so as to improve corrosion resistance of the explosion-proof structure 20 and avoid a situation that an opening force is inconsistent due to corrosion of the explosion-proof structure 20.

Meanwhile, the copper layer 30 is used as an anti-corrosion protection layer, and copper plating can be implemented at room temperature, that is, the copper layer 30 can be disposed on the cover plate body 10 without heating, thereby avoiding the explosion-proof structure 20 being strengthened due to heating, and ensuring consistency of the opening force of the explosion-proof structure 20. In addition, due to high thermal conductivity of copper, it facilitates heat dissipation of the battery.

It should be noted that, the electrical device may be a vehicle, an aircraft, or a household appliance. It should be noted that, the foregoing is merely an example for describing the electrical device, and does not specifically limit the electrical device.

## Claims

1. A cover plate, comprising:
a cover plate body;
an explosion-proof structure disposed on the cover plate body; and
a copper layer, wherein at least one side of the cover plate body is provided with the copper layer, the copper layer covers the explosion-proof structure, and the cover plate body and the copper layer are made of different materials.

2. The cover plate according to claim 1, wherein an upper surface of the cover plate body is provided with the copper layer; and/or a lower surface of the cover plate body is provided with the copper layer.

3. The cover plate according to claim 1, wherein the copper layer is disposed on the cover plate body by means of electroplating or electroless plating.

4. The cover plate according to any one of claims 1 to 3, wherein a ratio of a thickness of the copper layer to a thickness of the cover plate body is between 0.1% and 10%.

5. The cover plate according to any one of claims 1 to 3, wherein the explosion-proof structure comprises an explosion-proof score, and a bottom wall and a side wall of the explosion-proof score are both covered with the copper layer.

6. The cover plate according to claim 5, wherein a thickness of the copper layer at the bottom wall of the explosion-proof score is between 0.1µm and 6µm; and/or,
the thickness of the copper layer at the bottom wall of the explosion-proof score is less than a thickness of the copper layer at the side wall of the explosion-proof score; and/or
a thickness of the copper layer at the side wall of the explosion-proof score is less than a thickness of the copper layer at a peripheral side of an opening of the explosion-proof score; and/or
a chamfer is provided at a junction between the copper layer at the bottom wall of the explosion-proof score and the copper layer at the side wall of the explosion-proof score; and/or
a chamfer is provided at a junction between the copper layer at the side wall of the explosion-proof score and the copper layer at the peripheral side of the opening of the explosion-proof score.

7. The cover plate according to any one of claims 1 to 3, wherein a dyne value of the copper layer is greater than 36.

8. A battery, comprising a housing, an electrode assembly, and the cover plate according to any one of claims 1 to 7, wherein the housing is formed with a mounting cavity, the electrode assembly is mounted in the mounting cavity, and the cover plate is connected to the housing.

9. The battery according to claim 8, wherein the battery further comprises an electrode connecting piece, a first end of the electrode connecting piece is connected to the electrode assembly, a second end of the electrode connecting piece is connected to the cover plate, and material of the second end of the electrode connecting piece is the same as material of the copper layer; and/or, the cover plate body is formed with a groove, a groove opening of the groove faces a direction away from the mounting cavity, and a wall surface of the groove is provided with the copper layer.

10. An electrical device, comprising the battery according to any one of claims 8 to 9.
